Europäisches Patentamt

European Patent Office

Office européen des brevets

(11) Publication number: **0 032 831**
**A2**

# EUROPEAN PATENT APPLICATION

(21) Application number: **81300209.4**

(22) Date of filing: **19.01.81**

(51) Int. Cl.³: **G 01 F 11/02, B 67 D 3/02**

(30) Priority: **22.01.80 GB 8002025**

(43) Date of publication of application: **29.07.81**
Bulletin 81/30

(84) Designated Contracting States: **AT BE CH DE FR IT LI LU NL SE**

(71) Applicant: **Sandiacre Electrics Limited, PO Box 4 Clifton PDO Ruddington Lane, Wilford Nottingham (GB)**

(72) Inventor: **Dickinson, Eric, 109 Main Street Willoughby On The Wolds, Loughborough Leicestershire (GB)**
Inventor: **Dickinson, Timothy Norman, 109 Main Street Willoughby On The Wolds, Loughborough Leicestershire (GB)**
Inventor: **Easter, Alan, 114 Heanor Road, Smalley Derby (GB)**

(74) Representative: **Loven, Keith James et al, Eric Potter & Clarkson 14 Oxford Street, Nottingham NG1 5BP (GB)**

(54) **Device for dispensing pre-determined measure of a beverage and apparatus for monitoring dispensing of pre-determined measures of beverages.**

(57) A wine- or spirits-dispensing device or optic is provided with signal-generating means, for example a spaced infra-red emitting diode (28) and phototransistor with an interrupter (25), movable by the valve mechanism (11). A signal is thus generated every time a measure of wine or spirits is dispensed, thus enabling a count to be kept. Preferably the air vent valve (18), which admits air to the measuring chamber (10) to allow liquid to flow out into a drinking glass beneath the device, is used to operate the signal-generating means. A second signal may be generated by breaking electrical connections when removing the device from a support stand, thus enabling the number of bottles used to be counted.

The invention also provides apparatus comprising a central counting unit with memories and a plurality of signal-generating devices associated with optics and/or beer-metering pumps.

### DEVICE FOR DISPENSING PRE-DETERMINED MEASURE OF A BEVERAGE AND APPARATUS FOR MONITORING DISPENSING OF PRE-DETERMINED MEASURES OF BEVERAGES

This invention relates to a device for dispensing a pre-determined measure of a beverage by gravity from a storage vessel, and to an apparatus for monitoring the dispensing of such measures.

In public bars and the like standard measures of wines and spirits may be dispensed from dispensing devices, referred to as "optics", which have an inlet which fits into the neck of a bottle. The bottle can then be inverted and mounted in a supporting stand, allowing the wine or spirit to be dispensed by gravity. The optic typically contains a transparent-walled measuring chamber with a valve mechanism therein operated by pushing an actuating bar upwards.

It is desirable for accounting purposes to keep an accurate record of the number of measures dispensed, so that these may be compared with the till receipts. Various proposals have been made for counting devices incorporated in the dispensing device to count up the number of measures dispensed. In French Published Patent Application No 2 014 948, and in U.S. Patent Specification No 2 631 755, for example, dispensing devices are disclosed in which mechanical counters are incorporated to record the number of times the device has been operated. The construction of each of the devices disclosed is such as to permit the possibility of measures or parts of measures being dispensed without operating the counter, or of operating the counter without a full measure being dispensed. Further, with each device the meter has to be read accurately at regular intervals to give the information required.

U.S. Patent Specification No 2 795 355 discloses a dispensing device incorporating an electrical switch which

0032831

2

in turn operates a counter and a central ticket printing device. The valve mechanism disclosed is a sliding valve and it is possible for a signal to be generated without the full measure being dispensed.

A system is disclosed in German Published Application No 2 414 154 in which measure dispensing devices include an electrical switch which operates to give a signal, which in turn operates a pulse generating device to produce a train of pulses to operate an accounting device. The switch is shown as being between two relatively movable parts, but there is no indication as to how the problem of avoiding measures or part measures being dispensed without a signal being generated is overcome.

According to the present invention, the device, comprising a valve mechanism operable by movement of a receiving vessel in engagement therewith, is characterised in that it comprises a signal generating means arranged to generate a signal when the valve mechanism is operated to dispense a measure.

Preferably the valve mechanism comprises an air vent valve arranged to admit air to a measuring chamber in the device to allow the measure of beverage contained therein to flow out of the chamber and into the receiving vessel, the signal generating means being coupled to the air vent valve so as to generate a signal when the vent valve is opened. The signal generating means may comprise an electrical switch operable by an actuating member on the air vent valve. The switch may comprise a spaced photoelectric emitter and detector, the actuating member interrupting the radiation path between the emitter and the detector to generate a signal. Alternatively, a magnetically operable reed switch may be actuated by a magnet carried on the actuating member.

A second signal generating means may be arranged to generate a signal when the storage vessel is replaced by a fresh vessel. For example, where the device is arranged to be supported in a support stand adapted to support a bottle inverted over the device, the first signal generating device may be electrically connected to a separable electrical coupling, separation of which generates a signal, the first part of the coupling being mounted on the support and the device comprising the second part of the coupling.

It will be understood that by generating a signal is meant not only switching between a positive or negative voltage and zero, but also any detectable change in current, voltage, frequency, or any other characteristic in a flow of electricity.

The invention also provides apparatus for monitoring the dispensing of pre-determined measures of beverages, comprising signal generating means associated with each of a plurality of dispensing devices for generating an electrical signal when a measure of a beverage is dispensed, and a counting means electrically connected to each signal generating means to provide a count of the number of times a signal has been received from each dispensing device, characterised in that the counting means comprises first memory means for storing a separate count in respect of each dispensing device, and second memory means for storing a cumulative count for each dispensing device.

Display means may be provided for selectively displaying any count in the second memory means. The apparatus may monitor the signals generated by the dispensing device in accordance with the invention as well as signals generated by other dispensing devices such as beer pumps dispensing standard measures, for example half-pints $(284 \text{ cm}^3)$.

4.

The device of the invention permits the accurate generation of a signal when a measure of the spirit or wine is dispensed. Thus, using, for example, the apparatus of the invention, an accurate check can be kept on sales by different methods, e.g. by measure or by bottle, for which different prices may be charged.

Reference is made to the drawings in which:

Figure 1 is a partial cross-sectional view of a dispensing device in accordance with the invention; and

Figure 2 is a block diagram of a monitoring apparatus according to one aspect of the invention.

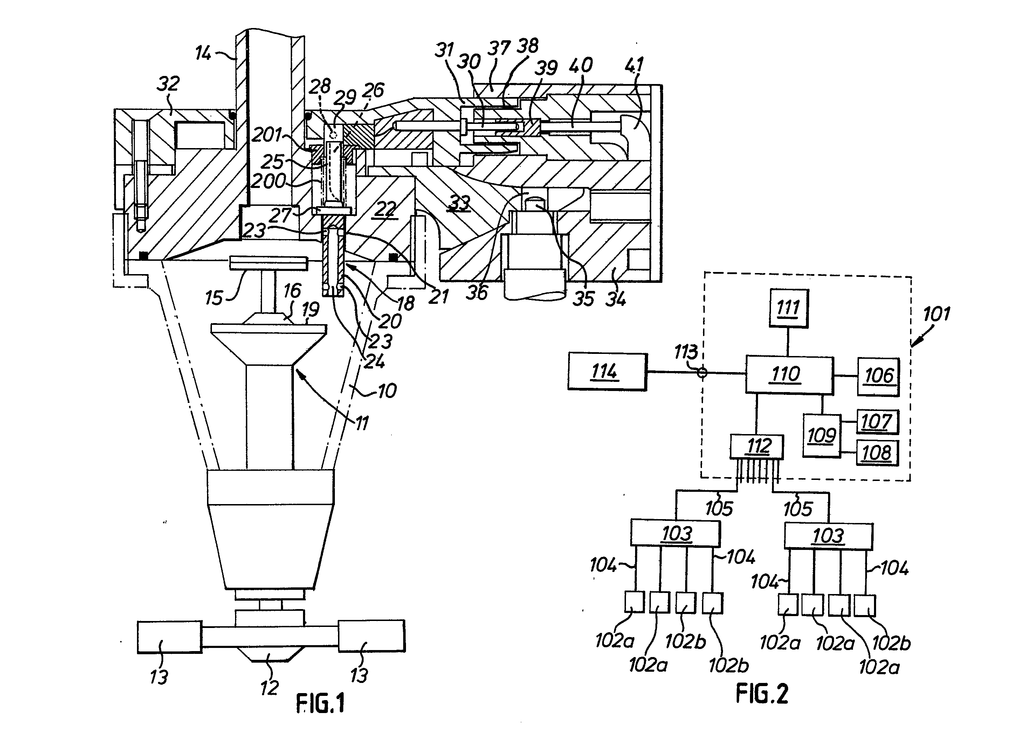

The dispensing device or optic shown in Figure 1 has a transparent-walled measuring chamber 10 containing a valve mechanism 11 controlling admission of liquid to the chamber from a bottle through a tube 14, and release from the chamber through a nozzle 12 located between two operating bars 13 against which, in use, a glass can be pushed upwardly to operate the mechanism 11. The tube 14 projects upwardly from the upper part of the optic and communicates with the chamber 10. This tube 14 is surrounded by a tapered cork (not shown) by which the optic is fitted into the neck of the bottle.

The valve mechanism 11 is spring-biased downwardly and has at its upper end a valve disc 15 which is depressible in the main barrel 16 of the mechanism 11 against a spring. This disc 15 seats around the lower mouth of the tube 14 as the valve mechanism moves upwardly to prevent ingress of liquid from the bottle before the outlet valve opens and an air inlet valve 18 is lifted open by a shoulder 19 on the valve mechanism, allowing the liquid to run out. An aperture is provided at a suitable location in the casing above the valve to admit air to the valve.

The air valve 18 comprises a tubular barrel 20 sliding as a close fit in a bore 21 through the cap 22 closing the upper end of the measuring chamber. The barrel 20 is closed at the upper end and has transverse drillings 23 at the upper and lower ends thereof both communicating with the internal longitudinal bore 24 of the barrel. Thus, when the air valve 18 is lifted sufficiently by the shoulder 19, air flows through the upper drilling into the bore 24 and thence to the measuring chamber 10. An integrally formed signalling pin 25 extends axially from the upper end of the air valve. The pin 25 is formed with a longitudinal channel 26 therethrough to ensure that any liquid which may seep down into the space around the upper end of the pin 25 is drained away downwards and so cannot form a droplet on the upper end of the pin effectively increasing the length of the pin and so causing a false signal to be generated. A flexible seal ring 27 is seated in a groove around the outer surface of the air valve barrel 20 to ensure air-tightness of the valve when closed, and a spring 200 seats between the barrel 20 and a retaining cap 201 to bias the air valve closed.

The signal-generating device comprises a light-emitting diode (LED) 28, operating in the infra-red region and encapsulated in a polysulphone material transparent to the infra-red radiation from the device to ensure that droplets of liquid do not form in the path of the infra-red radiation, interfering with their transmission, and a phototransistor (not shown), which is similarly encapsulated and located diametrically opposite the LED 28 across the space 29 into which the pin 25 extends when the air valve 18 is opened. The pin 25 thus interrupts the infra-red radiation path and thus the output of the phototransistor, providing the signal indicating operation of the dispensing device.

The electrical connections for the LED and phototransistor are through three connecting pins 30 in a connecting plug 31 moulded into the upper casing 32 of the device. Two of the connecting pins 30 serve as positive supply connectors for the LED and the phototransistor respectively, while the third pin serves as a common earth connector. The supply connector pin for the LED is made shorter than the other two pins so that when the plug 31 is pulled out of its connecting socket, described hereinafter, the connection to the LED is broken first, ensuring that disconnection always generates the same signal. This avoids errors in signalling.

The optic is mounted on a conventional support stand (not shown), by means of a supporting arm 33 which is pushed into a supporting bracket 34 forming part of the stand and having a spring-biased locking bar 35 which extends into an aperture 36 in the arm 33. An electrical connecting socket 37 is mounted on the bracket 34 and comprises a casing having an opening 38 for receiving the connecting plug 31 in such a manner that the pins 30 are received in tubular connectors 39 each joined to a separate conductor 40 in a connecting cable 41 by which the optic is connected to a central counting unit, for example as hereinafter described with reference to Figure 2,3 or 4. The arm 33 and bracket 34 are designed such that the optic cannot be held in the stand without electrical connections being made between all the pins 30 and the corresponding connectors 39.

In use, a drinking glass is engaged with its rim on the bars 13 and pushed upwardly. The wine or spirit contained in the measuring chamber 10 is not released until the air vent valve is opened. The valve and the pin 25 thereon are so arranged that as soon as air is admitted to the measuring chamber the infra-red radiation path is interrupted by the pin and thus a signal is sent. When the bottle is empty, replacement is effected by removing the bottle and the device from the stand, thus breaking the connection between the plug 31 and socket 37. Because the pin 30 supplying power to the LED is shorter than the other two pins, the LED is switched off just before the phototransistor is disconnected, thus ensuring that no false signals are generated. The power supply to the LED can be monitored, the break in the line giving a signal indicating the change of bottle.

The optic can be connected electrically to any suitable control unit which can provide power operating the LED and phototransistor and which can count and store the number of times the optic has been operated and the number of times the bottle has been changed. The counting unit described with reference to Figure 2 is suitable for this purpose.

The apparatus comprises a central counting unit 101 electrically connected to a plurality of signal generating devices 102, associated with wines or spirits-dispensing optics 102a and/or with beer-metering pumps 102b, through distributed networks 103, which bring together up to sixteen individual lines 104 and are coupled to the central unit 101 through single lines 105. Typically, up to eight individual lines 104 are used, permitting monitoring of a total of 128 lines, which may be for any combination of beer or wines or spirits units, as desired. Greater capacity may be achieved by the use of larger memories and a more powerful microprocessor.

The counting unit 101 comprises a random access memory (RAM) 106 providing storage into which individual counts and other information may be entered and from which they may be retrieved. The RAM 106 comprises a plurality of separate memories to provide a permanent cumulative count and a re-settable short-term count.

A display 107, in the form of a four digit, seven-segment, light-emitting diode display, for example, is used to display counts selected by selector switches 108. The number codes of the individual optics or pumps can be displayed in turn, with an indication of the number of counts obtained. The display 107 and selector switches 108 are connected via an interface 109 to a microprocessor 110, to which the RAM 106, a programmable read-only memory (PROM) 111, and an input interface 112 linking the inputs from the signal generating devices 102, are also connected. The PROM 111 stores the programme which controls the operation of the microprocessor 110, which in turn controls the storage, retrieval and display of counts from each device 102 and which also includes a clock so that the date and time at which the short-term memory was last re-set can be stored.

The current passed to and from the signal generating units may be pulsed, and signal multiplexing may conveniently be applied.

The central unit 101 includes a connecting socket 113 linked through an appropriate interface (not shown) to the microprocessor 110, enabling a portable control and printing unit 114 to be connected thereto. The control and printing unit 114 includes a printer providing a permanent record of any of the counts stored in the central unit 101 and controls permitting the short-term memory to be reset. In an alternative form of control and printing unit, a tape or other recorder is included. This form is particularly suited to use in establishments where control of accounting and stock lies with a central office. Data can be collected from each establishment, e.g. a public house or bar, using the portable unit 114, and then the recordings so made replayed to feed the data into a computer at the central office.

Alternatively, means may be provided in the central unit 101 permitting direct communication with a computer, for example by a telephone line.

In an alternative form of the dispensing device in accordance with the invention, fibre optics convey a light beam to and from a signal generating cell in which a member is moved to break the beam across the cell when the valve mechanism operates, preferably when the air valve opens. The fibre optic connections may continue to a central counting unit, or to an intermediate converter, in which the light signals are converted into electric signals which are sent to the central unit.

10

CLAIMS

1.    A device for dispensing a pre-determined measure of a beverage by gravity from a storage vessel, comprising a valve mechanism operable by movement of a receiving vessel in engagement therewith, characterised in that it comprises a signal generating means arranged to generate a signal when the valve mechanism is operated to dispense a measure.

2.    A device according to Claim 1, characterised in that the signal generating means is caused to generate a signal in response to movement of a lever or push-rod engageable by the valve mechanism during operation thereof.

3.    A device according to Claim 1, wherein the valve mechanism comprises an air vent valve arranged to admit air to a measuring chamber in the device to allow the measure of beverage contained therein to flow out of the chamber and into the receiving vessel, characterised in that the signal generating means is caused to operate by the air vent valve so as to generate a signal when the vent valve is opened.

4.    A device according to Claim 3, characterised in that the signal generating means comprises a spaced photoelectric emitter and detector, and the air vent valve or an actuating member thereon interrupts the radiation path between the emitter and detector to generate a signal.

5.    A device according to Claim 4, characterised in that the emitter and detector are encapsulated in a material transparent to the radiation emitted by the emitter, and in that the opposed faces of the emitter and detector are planar and substantially vertical.

6.    A device according to Claim 4 or 5, characterised in that the air vent valve has an axially-extending spindle on the upper end thereof, movable between the emitter and detector.

7.    A device according to Claim 6, characterised in that the spindle has a axially-extending passage therein which opens into the upper end of the spindle, whereby liquid on the upper end may drain away.

8.    A device according to any preceding claim, characterised in that it comprises a second signal generating means arranged to generate a signal when the storage vessel is replaced by a fresh vessel.

9.    A device according to Claim 8, arranged to be supported in a support stand adapted to support a bottle inverted over the device, characterised in that the first signal generating means is electrically connected to a separable electrical coupling, separation of which generates a signal, and in that the first part of the coupling is mounted on the support and the device comprises the second part of the coupling.

10.    A device according to Claim 9, wherein the signal generating means comprises a photoelectric emitter and detector, characterised in that one part of the coupling comprises  two or more connecting members and the other part of the coupling comprises corresponding sockets to receive the connecting members, and in that the connecting member electrically connected to the emitter is shorter than the other member or members, whereby upon separation of the two parts of the coupling said one connecting member ceases to make electrical contact with the socket before the other member or members.

11.    Apparatus for monitoring the dispensing of pre-determined measures of beverages, comprising signal generating means associated with each of a plurality of dispensing devices for generating an electrical signal when a measure of beverage is dispensed and counting means electrically connected to each signal generating means to provide a count of the number of times a signal has been received from each dispensing device, characterised in that the counting means comprises first memory means for storing a separate count in respect of each dispensing device, and second memory means for storing a cumulative count for each dispensing device.

12.    Apparatus according to Claim 11, characterised in that display means are provided for selectively displaying any count in the second memory means.

FIG.2

FIG.1